(19) Europäisches Patentamt
European Patent Office
Office européen des brevets

(11) **EP 2 309 448 A1**

(12) **EUROPEAN PATENT APPLICATION**

(43) Date of publication:
**13.04.2011 Bulletin 2011/15**

(51) Int Cl.:
*G06T 5/00* (2006.01)        *G06T 5/40* (2006.01)
*H04N 5/57* (2006.01)

(21) Application number: **09171023.6**

(22) Date of filing: **22.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **NXP B.V.**
**5656 AG Eindhoven (NL)**

(72) Inventors:
• **Leitao, Andre**
  **Redhill, Surrey RH1 1DL (GB)**

• **Mesadi, Fitsum**
  **Redhill, Surrey RH1 1DL (GB)**

(74) Representative: **Williamson, Paul Lewis et al**
**NXP Semiconductors**
**Intellectual Property Department**
**Betchworth House**
**57-65 Station Road**
**Redhill**
**Surrey RH1 1DL (GB)**

(54) **Local image contrast enhancement**

(57)    A contrast enhancement method for an image. The method comprises: generating a local contrast estimate for each pixel of the image; deriving a gain value for each pixel from the local contrast estimate; generating an enhancement value for each pixel by applying the gain value to the local contrast estimate; and generating an enhanced image, based on the image and the enhancement value for each pixel.

FIG 1

## Description

This invention relates to contrast enhancement for images or frames of video. In particular, it relates to local contrast enhancement, in which the degree of enhancement is locally adapted to the image content.

Contrast enhancement of images or video frames (hereinafter referred to collectively as images) commonly involves analysis and modification of the histogram of the luminance values. One known way of implementing such a contrast enhancement algorithm is by applying a transfer function to the values of the video signal. Power-law transformations such as gamma correction are widely used. Adaptive methods, such as histogram equalization, determine the shape of the transfer function based on the statistical properties of the image itself. Histogram equalization optimally distributes signal variations over the available luminance levels. However, the application of histogram equalization to natural images can result in over-enhancement of some regions.

To address the problems of global methods, such as histogram equalization, local contrast enhancement techniques have been proposed. These try to enhance the visibility of local image details, by amplifying the difference between the luminance value of a pixel and its local mean. Multiscale analysis can be used to take into account the range of different scales at which image details can appear.

According to an aspect of the invention, there is provided a contrast enhancement method for an image, comprising: generating a local contrast estimate for each pixel of the image; deriving a gain value for each pixel from the local contrast estimate; generating an enhancement value for each pixel by applying the gain value to the local contrast estimate; and generating an enhanced image, based on the image and the enhancement value for each pixel.

The local contrast estimate can comprise any suitable function or measure for analysing the amount of contrast in a local neighbourhood of each pixel. Preferably, the contrast estimate describes a difference value of a point relative to its surroundings. This description can be obtained in a variety of ways, including linear or non-linear filtering of the input image. For example, the local contrast estimate may be based on one or more high-pass or band-pass filtered versions of the input image. The local contrast estimate is used both to determine the gain or degree of contrast enhancement that should be applied at each pixel, and then to perform the enhancement, by applying the derived gain to the contrast estimate and re-combining with the original image. This results in a computationally economical algorithm, which can automatically adapt to the level of contrast at each pixel and efficiently enhance it by an appropriate amount.

The step of generating the enhancement value for each pixel can comprise multiplying the local contrast estimate by the gain value.

The step of generating the enhanced image can comprise adding the enhancement value for each pixel to the image.

The gain value for each pixel is preferably a function of the absolute value of the local contrast estimate.

Some contrast estimates may exhibit both positive and negative values. In this case, it is the absolute value or magnitude of the contrast estimate that is significant in determining the gain.

The function preferably comprises a first portion providing decreasing values of gain with increasing values of the local contrast estimate.

The gain is therefore set to be small when the measured contrast is large. This helps to avoid clipping artefacts and over enhancement on regions that are already highly contrasted in the input image.

Optionally, the function further comprises a second portion providing a minimum value of gain for values of the local contrast estimate less than a predetermined threshold.

The gain is set to be very small when the measured contrast is minimal. This helps to avoid enhancing noise on flat (uniform, homogeneous) areas, as the measured contrast in these regions is usually very small. It therefore represents an advantageous refinement of (and exception to) the general principle of applying higher gains for relatively lower values of contrast. The highest gain values are therefore used when the measured contrast is in an intermediate range, above the minimum threshold, but not already highly contrasted (in the input image). This helps to give considerable contrast enhancement on regions in which detail or structure is present, but have low contrast in the input image.

The function may further comprise a third portion providing a smooth transition between the first and second portions.

This can help to avoid artefacts created by a discontinuous or rapidly changing gain value over a small range of different levels of the contrast estimate.

The function may be piecewise linear.

The first, second and third portions may each be linear. Piecewise linearity means that a small number of parameters completely specify the function. These can be easily adjusted. In addition, this facilitates easy implementation: for example the gain values can be calculated by simple linear interpolation.

The method may further comprise extracting a plurality of sub-band images from the image, each of which comprises detail information at a different spatial scale; and wherein the local contrast estimate for each pixel is generated based on the plurality of sub-band images.

Each sub-band image comprises information in a respective different band of spatial frequencies of the input image. In this way, detail information at different scales is taken into account by the different frequency sub-bands. Note that the reference to "sub-band" should not be taken to imply a limitation to decompositions of the type using a linear filter-bank, although these are certainly one useful example. Detail at different scales can also be extracted by non-linear filtering, such as morphological methods.

The step of generating the local contrast estimate for each pixel may comprise weighted combination of the plurality of sub-band images.

The step of extracting the plurality of sub-band images can comprise: generating a series of low-pass filtered images having successively lower cut-off frequencies; and generating the sub-band images based on the difference between successive low-pass filtered images.

This method can be seen as the diffusion from a given pixel in all directions and at a fixed rate, combining (for example, by weighted summation) the differences between averages of consecutive expansions.

Also provided is a computer program comprising computer program code means adapted to perform all the steps of the method described above when said program is run on a computer; and such a computer program embodied on a computer readable medium.

Also provided is image processing apparatus comprising: an input, for receiving an image; contrast estimation means, adapted to generate a local contrast estimate for each pixel of the image; gain derivation means, adapted to derive a gain value for each pixel from the local contrast estimate; enhancement value calculation means, adapted to generate an enhancement value for each pixel by applying the gain value to the local contrast estimate; and image enhancement means, adapted to generate an enhanced image, based on the image, and the enhancement value for each pixel.

The invention will now be described by way of example with reference to the accompanying drawings, in which:

   Fig. 1 shows an image processing pipeline implementing a method according to an embodiment
   Fig. 2 illustrates a gain function according to the embodiment;

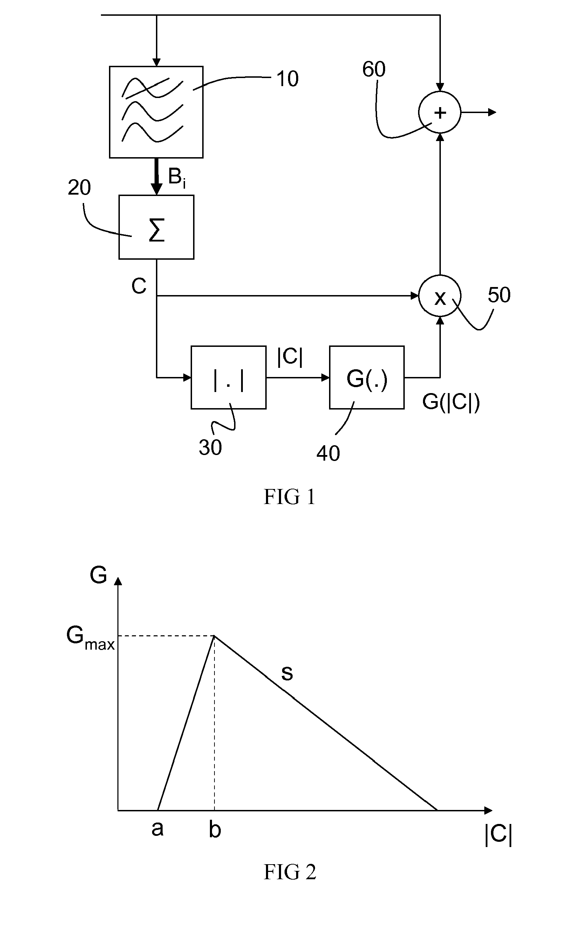

A contrast enhancement method for an image according to an embodiment of the invention will now be described, with reference to Fig. 1. This shows an image processing pipeline. The input is the image to be enhanced.

The first stage in the method or pipeline is generating 10, 20 a local contrast estimate C for each pixel of the image. This is a measure of the level of contrast already present in the input image. The contrast estimate is defined for each pixel. It estimates the contrast in a small local neighbourhood centred on each pixel. For example, it can capture a measure of the difference between the pixel at the centre of the neighbourhood and the surrounding pixels. Neighbourhoods of different sizes can be considered, using a multiscale approach.

A gain value is then derived 30, 40 for each pixel, from the local contrast estimate. In the present embodiment, the gain value is derived directly from the contrast, by means of a one-to-one mapping. The gain represents the degree to which contrast should be enhanced for each pixel. In other words, the gain is a contrast enhancement factor. The present inventors have recognised that it is advantageous to derive the gain from an actual estimate of the contrast in the local region, because this can avoid unbalanced contrast enhancement and, in particular, over-enhancement of uniform regions of the image. The gain can therefore adapt locally to spatially varying contrast characteristics of an image.

The derived gain value is applied 50 to the local contrast estimate to generate an enhancement value for each pixel. Finally, this enhancement value is combined with the original input image, to generate the enhanced output image.

In this embodiment, the contrast estimate is derived from the input image by band-pass filtering 10. A plurality of sub-band images is extracted from the input image. Each of these sub-band images comprises detail information at a different spatial scale. Finer scales correspond to higher spatial frequencies; coarse scales correspond to lower spatial frequencies.

In particular, the step of extracting the plurality of sub-band images comprises generating a series of low-pass filtered images having successively lower cut-off frequencies:

$$V_i^{LP} = F_i^{LP} \otimes V$$

Here, V is the luminance of the original video signal, $F_i^{LP}$ represents the spatial filter kernel of the low-pass filter for scale $i$, and $V_i^{LP}$ denotes the low-pass filtered output for that scale. The filters for each scale are successively larger. In the present embodiment, simple box filters are used for this low-pass filtering process. This allows the use of an integral image for the filter calculations. As will be well known to those skilled in the art, an integral image is an array in which the values are cumulatively summed. The sum of the elements in an arbitrary-sized rectangular area of the original array can be derived from a small, fixed number of memory accesses and arithmetic operations. Thus, the integral image enables any box-filtered frequency component to be extracted, regardless of the kernel size, using only a small number of calculations and with no additional memory requirements.

This step can also be understood as an isometric diffusion from a given point and taking the difference of the averages of the consecutive boxes. The diffusion above is tested for an expansion rate of 1 pixel. That is, at each successive scale, the size of the low-pass filter expands by one pixel in each of four directions (left, right, up, down). A higher expansion rate could be used, although the quality of the results may decrease. Since the integral image is used for splitting the image into a series of frequency bands, the implementation can still be considered very efficient even if a large number of frequency bands are calculated (corresponding to a small expansion rate). In the present example, the maximum diffusion is 16 pixels in all directions, which results in a largest box filter size of 33x33 for every pixel.

The sub-band images are generated based on the difference between successive low-pass filtered images:

$$ B_i = V_i^{LP} - V_{i-1}^{LP} $$

where $B_i$ is the band-pass image at each scale. This step in the specific method is similar to unsharp filtering.

The local contrast estimate for each pixel is generated 20 based on the plurality of sub-band images. In particular, the step of generating the local contrast estimate C for each pixel comprises weighted combination of the plurality of sub-band images:

$$ C = \sum_i w_i B_i $$

Here, $w_i$ is the weight corresponding to $i^{th}$ band. These weights are set such that $w_i > w_{i+1} > w_{i+2} > ... > w_N$. The reason for giving higher weight to higher band-pass signals is that, in the spatial domain, this corresponds to the points which are closer to the pixel under consideration. Since pixels relatively far from the point being considered should have less impact on the contrast estimate, a lower weight is given for lower frequency band signals. The contrast value, C, ranges from near zero in flat areas to a much higher value in high-contrast detail areas and strong edge areas.

Next, the gain setting function will be described. In this embodiment, the gain value for each pixel is a function of the absolute value of the local contrast estimate.

The absolute value of the contrast estimate of a pixel is related to the content of its surrounding neighbourhood, such that: the estimate has a low value on flat (uniform luminance) areas; has a high value on highly contrasted detailed areas; and has a medium value on low-contrasted detailed areas. On this basis, the gain is set based on the contrast magnitude as follows: gain is set to zero until the contrast estimate reaches some significant contrast magnitude, and then it is increased smoothly to a maximum value after which it is slowly decreased to zero, for larger contrast magnitudes. The advantages of this gain setting technique are to mitigate the enhancement of noise in flat areas; to reduce over-enhancement of already highly contrasted areas; and to allow better enhancement of the lowly contrasted detailed areas.

A suitable gain function is illustrated in Fig. 2.

The function comprises a first portion providing decreasing values of gain with increasing values of the local contrast estimate. This corresponds to an upper range of the contrast estimate. The function also comprises a second portion providing a minimum value of gain for values of the local contrast estimate less than a predetermined threshold. In an intermediate range of the contrast estimate, the function comprises a third portion providing a smooth transition between the first and second portions. In this example, the function is piecewise linear.

Four parameters control the gain function of Fig. 2. These can be fixed and adjusted manually, since they will depend on the application, type of input image, and numerical range of the contrast estimate, among others.

Parameter a represents the threshold value below which the estimated contrast is assumed to be due to noise and the pixel belongs to a region of substantially uniform intensity. Below this threshold, the gain is minimal (or zero) Parameter b sets the contrast value which receives maximum gain. Gmax is this maximum gain. The function provides a linear transition from the minimum value at |C|=a, to the maximum value at |C|=b. This offers a smooth transition in gain from flat areas to low contrast detail areas. Parameter s is the slope of the gain function beyond the maximum value. It is set such that areas already having high-contrast get the minimum gain. For noisy images, if the amount of noise is known, parameter a can be set to the noise contrast value such that an enhancement is obtained without enhancing noise. Note also that smoother curves can be used instead of the piecewise linear lines of Fig. 2.

When the gain has been determined for each pixel, it is applied to the contrast estimate C by multiplication 50, to generate an enhancement value for each pixel. This enhancement value is then added 60 to the original input image to create the contrast-enhanced output image. In other words, the output image O is defined as:

$$ O = V + G\big(|C|\big) \times C $$

Methods according to embodiments can be implemented in a variety of ways, according to the application. For contrast enhancement of video signals - for example, in a display device - a hardware pipeline implementation such as that of Fig. 1 may be appropriate.

Such image processing apparatus comprises: an input, for receiving an image; contrast estimation means 10, 20, adapted to generate a local contrast estimate C for each pixel of the image; gain derivation means 30, 40, adapted to derive a gain value for each pixel from the local contrast estimate C; enhancement value calculation means 50, adapted to generate an enhancement value for each pixel by applying the gain value to the local contrast estimate; and image enhancement means 60, adapted to generate an enhanced image, based on the image and the enhancement value for each pixel. Each of these elements can be implemented as circuits in an ASIC or FPGA, for example.

Alternatively, a suitably programmed digital signal processor or general purpose computer processor can be used to implement the method. In this case, the elements of Fig. 1 represent the logical process flow executed by the processor, rather than physical hardware components. Such a software implementation of the invention may be appropriate for image enhancement software in a personal computer. It may also be suitable for embedded implementation in devices such as digital cameras or camera-phones, which already include a general purpose microprocessor or a digital signal processor.

While the invention has been illustrated and described in detail in the drawings and foregoing description, such illustration and description are to be considered illustrative or exemplary and not restrictive; the invention is not limited to the disclosed embodiments.

For example, it is possible to operate the invention in an embodiment wherein the contrast enhancement is applied to signals other than luminance. If the input image data is in a different colour space (such as RGB), the contrast enhancement could be applied to those signals instead.

In the embodiment described above, successive low-pass filtering and differencing (unsharp filtering) were used to extract the sub-band images. However, many alternatives to this are possible. For example, a wavelet transform could be used to extract sub-band images. Non-linear methods such as morphological filtering may also be another appropriate alternative.

As will be apparent to the skilled person, the extraction of multiple sub-band images is optional. It is merely one conveniently implemented embodiment. For example, if the local contrast estimate is defined as a linear summation of the outputs of different linear filters (as in the main embodiment described above), a single, more complex, equivalent filter could be defined, which takes the place of the filter bank. This equivalent filter would also take into account the fixed weights, $w_i$, applied to each sub-band filter, as necessary.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A contrast enhancement method for an image, comprising:

   generating a local contrast estimate for each pixel of the image;
   deriving a gain value for each pixel from the local contrast estimate;
   generating an enhancement value for each pixel by applying the gain value to the local contrast estimate; and
   generating an enhanced image, based on the image and the enhancement value for each pixel.

2. The method of claim 1, wherein the step of generating the enhancement value for each pixel comprises multiplying the local contrast estimate by the gain value.

3. The method of any of claims 1 or claim 2, wherein the step of generating the enhanced image comprises adding the enhancement value for each pixel to the image.

4. The method of any preceding claim, wherein the gain value for each pixel is a function of the absolute value of the local contrast estimate.

5. The method of claim 4, wherein the function comprises a first portion providing decreasing values of gain with increasing values of the local contrast estimate.

6. The method of claim 5, wherein the function further comprises a second portion providing a minimum value of gain for values of the local contrast estimate less than a predetermined threshold.

7. The method of claim 5 or claim 6, wherein the function further comprises a third portion providing a smooth transition between the first and second portions.

8. The method of any of claims 4 to 7, wherein the function is piecewise linear.

9. The method of any preceding claim, further comprising extracting a plurality of sub-band images from the image, each of which comprises detail information at a different spatial scale; and

wherein the local contrast estimate for each pixel is generated based on the plurality of sub-band images.

10. The method of claim 9, wherein the step of generating the local contrast estimate for each pixel comprises weighted combination of the plurality of sub-band images.

11. The method of claim 9 or claim 10, wherein the step of extracting the plurality of sub-band images comprises:

generating a series of low-pass filtered images having successively lower cut-off frequencies; and
generating the sub-band images based on the difference between successive low-pass filtered images.

12. A computer program comprising computer program code means adapted to perform all the steps of any of claims 1 to 11 when said program is run on a computer.

13. A computer program as claimed in claim 12 embodied on a computer readable medium.

14. Image processing apparatus comprising:

an input, for receiving an image;
contrast estimation means, adapted to generate a local contrast estimate for each pixel of the image;
gain derivation means, adapted to derive a gain value for each pixel from the local contrast estimate;
enhancement value calculation means, adapted to generate an enhancement value for each pixel by applying the gain value to the local contrast estimate; and
image enhancement means, adapted to generate an enhanced image, based on the image, and the enhancement value for each pixel.

FIG 1

FIG 2

Europäisches
Patentamt

European
Patent Office

Office européen
des brevets

# EUROPEAN SEARCH REPORT

**Application Number**

EP 09 17 1023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/27657 A2 (HEWLETT PACKARD CO [US]) 4 April 2002 (2002-04-04) * figures 1-3 * * figures 1-3 * | 1-14 | INV. G06T5/00 G06T5/40 H04N5/57 |
| X | EP 2 073 170 A1 (TNO [NL]) 24 June 2009 (2009-06-24) * paragraph [0018]; figures 1-5 * * figures 1-3 * | 1-14 | |
| X | EP 1 814 078 A1 (VESTEL ELEKT SANAYI VE TICARET [TR]) 1 August 2007 (2007-08-01) * paragraph [0047] * * paragraph [0029] * | 1,12-14 | |
| X | CAPRA A ET AL: "Dynamic Range Optimization by Local Contrast Correction and Histogram Image Analysis" CONSUMER ELECTRONICS, 2006. ICCE '06. 2006 DIGEST OF TECHNICAL PAPERS. INTERNATIONAL CONFERENCE ON LAS VEGAS, NV, USA 07-11 JAN. 2006, PISCATAWAY, NJ, USA,IEEE, 7 January 2006 (2006-01-07), pages 309-310, XP010896628 ISBN: 978-0-7803-9459-9 * the whole document * | 1,12-14 | TECHNICAL FIELDS SEARCHED (IPC) G06T H04N |
| X | BRESSAN MARCO ET AL: "Local contrast enhancement" PROCEEDINGS OF THE SPIE - THE INTERNATIONAL SOCIETY FOR OPTICAL ENGINEERING, SPIE, US, vol. 6493, 29 January 2007 (2007-01-29), pages 1-12, XP002480671 ISSN: 0277-786X * the whole document * | 1,12-14 | |

-/--

The present search report has been drawn up for all claims

| Place of search | Date of completion of the search | Examiner |
|---|---|---|
| Munich | 5 March 2010 | Brod, Rosemarie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 09 17 1023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NARENDRA P M ET AL: "REAL-TIME ADAPTIVE CONTRAST ENHANCEMENT" IEEE TRANSACTIONS ON PATTERN ANALYSIS AND MACHINE INTELLIGENCE, IEEE SERVICE CENTER, LOS ALAMITOS, CA, US, vol. PAMI-03, no. 6, 1 November 1981 (1981-11-01), pages 655-661, XP008003619 ISSN: 0162-8828 * the whole document * ----- | 1,12-14 | |
| X | GUILLON S ET AL: "Robust nonlinear contrast enhancement filters" PROCEEDINGS OF THE INTERNATIONAL CONFERENCE ON IMAGE PROCESSING (ICIP) LAUSANNE, SEPT. 16 - 19, 1996; [PROCEEDINGS OF THE INTERNATIONAL CONFERENCE ON IMAGE PROCESSING (ICIP)], NEW YORK, IEEE, US, vol. 1, 16 September 1996 (1996-09-16), pages 757-760, XP010202176 ISBN: 978-0-7803-3259-1 * figure 7 * ----- | 1,12-14 | |

TECHNICAL FIELDS
SEARCHED (IPC)

The present search report has been drawn up for all claims

| Place of search | Date of completion of the search | Examiner |
|---|---|---|
| Munich | 5 March 2010 | Brod, Rosemarie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                EP 09 17 1023

This annex lists the patent family members relating to the patent documents cited in  the above-mentioned European search report.
The members are as contained in the European Patent Office EDP file on
The European Patent Office is in no way liable for these particulars which are merely given for the purpose of information.

05-03-2010

| Patent document cited in search report | | Publication date | Patent family member(s) | | Publication date |
|---|---|---|---|---|---|
| WO 0227657 | A2 | 04-04-2002 | AU | 1078702  A | 08-04-2002 |
| | | | EP | 1323132  A2 | 02-07-2003 |
| | | | JP | 4063665  B2 | 19-03-2008 |
| | | | JP | 2004510268  T | 02-04-2004 |
| | | | US | 2005169553  A1 | 04-08-2005 |
| | | | US | 6915024  B1 | 05-07-2005 |
| EP 2073170 | A1 | 24-06-2009 | WO | 2009078717  A2 | 25-06-2009 |
| EP 1814078 | A1 | 01-08-2007 | AT | 450841  T | 15-12-2009 |
| | | | US | 2007171310  A1 | 26-07-2007 |

For more details about this annex : see Official Journal of the European Patent Office, No. 12/82